# EUROPEAN PATENT SPECIFICATION

(11) **EP 2 158 993 B1**
(45) Date of publication and mention of the grant of the patent: **20.11.2013**
(21) Application number: 09165459.0
(22) Date of filing: 14.07.2009
(51) Int. Cl.: B23H 1/02, B23H 7/10, B23H 11/00

(54) **Wire electric discharge machine having function of detecting detachment/attachment of an electrode pin**
Elektrische Drahtentladungsmaschine mit Funktion zum Erkennen einer Ablösung/Anfügung eines Elektrodenstifts
Machine de décharge électrique faisant appel à un fil dotée d'une fonction de détection de retrait/fixation d'une broche d'électrode

(30) Priority: 28.08.2008 JP 2008219686
(43) Date of publication of application: 03.03.2010
(73) Proprietor: FANUC CORPORATION, Oshino-mura Minamitsuru-gun Yamanashi 401-0597 (JP)
(72) Inventor: Kawahara, Akiyoshi, Minamitsuru-gun, Yamanashi 401-0597 (JP); Murai, Masao, Minamitsuru-gun, Yamanashi 401-0597 (JP); Nakashima, Yasuo, Minamitsuru-gun, Yamanashi 401-0597 (JP); Furuta, Tomoyuki, Minamitsuru-gun, Yamanashi 401-0597 (JP)
(74) Representative: Ward, James Norman

(56) References cited:
- JP-A- 62 188 625
- JP-A- 63 221 927

## Description

### BACKGROUND OF THE INVENTION

### 1. Field of the Invention

The present invention relates to a wire electric discharge machine which has a plurality of machining power sources and power supply lines to be selectively used according to machining conditions, for machining a workpiece by periodic electric discharges between a wire electrode and the workpiece caused by applying an appropriate voltage between them.

### 2. Description of Related Art

Some wire electric discharge machines have a machining power source for rough machining and a machining power source for finish machining which are separately provided in order to improve machining speed and finish surface roughness. In high-precision machining, machining is carried out more than once to form one shape. First, high-speed machining is performed at relatively high power by using the machining power source for rough machining (rough machining), and a machining surface is subsequently removed at reduced power by using the machining power source for finish machining (finish machining), to thereby obtain desired machining accuracy and surface roughness.

As a wire electric discharge machine performs the machining of a workpiece while driving a wire electrode, the power supply from a machining power source to the wire electrode is carried out by electrically connecting one polarity of a power supply line to the wire electrode through an electrode pin that comes into sliding contact with the wire electrode and by electrically connecting the other electrode to the workpiece.

There is a publicly known document mentioned below, which is related to a wire electric discharge machine using a rough machining power source and a finish machining power source.

JP 4-6489B, which is considered the closest prior art, discloses the technology of a wire electric discharge machine provided with a fixed electrode pin for rough machining and a fixed electrode pin for finish machining. This technology changes the drive path of a wire electrode by moving a reel, and selects whether the wire electrode comes into sliding contact with the fixed electrode pin for rough machining or with the fixed electrode pin for finish machining.

JP 4-59092B and JP 3404119B disclose the technology of a wire electric discharge machine that is provided with a movable electrode pin for rough machining and a movable electrode pin for finish machining, and moves the movable electrode pins to select the movable electrode pin that will be brought into contact with a wire electrode.

Furthermore, JP 2932340B discloses the technology of detecting that a wire electrode falls off a path. According to this technology, a contact detection plate is disposed so that the wire electrode contacts the contact detection plate after falling off the path, and a contact detection pulse is applied between the contact detection plate and the wire electrode.

JP 63-221927A and JP 5-96421A disclose the technology of detecting a contact state between a wire electrode and an electric conductive element (power supply element). According to this technology, a dedicated detection circuit is disposed between the wire electrode and the electric conductive element (power supply element) for detecting the contact state.

When the drive path of the wire electrode is moved, or the movable electrode pin is used, in order to select between the machining power source for rough machining and the machining power source for finish machining, it is required to provide a driving mechanism for that purpose to the wire electric discharge machine. In Japanese Examined Patent Publication No. 4-6489, for example, a driving mechanism for moving a reel is provided to each of two conductive-part assemblies (see FIG. 1 of JP 4-6489B).

In JP 4-59092B, conductive-terminal moving mechanisms are provided, in which hydraulic cylinders or solenoids for moving movable electrode pins are used in two guide holders of a wire electrode. JP 3404119B mentions a hydraulic cylinder, an air cylinder or a solenoid (see Par. [0007]) as an example of an actuator that is fixed to a guide holder of a wire electrode.

When the guide mechanism of a wire electrode is provided with a driving mechanism of an air cylinder or a fluid cylinder such as a hydraulic cylinder, and the power supply from the machining power source for rough machining and the power supply from the machining power source for finish machining are switched between each other in order to make movable the wire electrode or the electrode pin as described above, there is a problem in credibility as to whether the switching of the power sources is made without fail. If motion is not made according to a command from a controller of the wire electric discharge machine, this incurs a reduction in machining speed during rough machining, and also incurs a deterioration in surface roughness at the time of finish machining, which damages an expensive workpiece.

### SUMMARY OF THE INVENTION

The present invention provides a wire electric discharge machine capable of detecting a contact and non-contact of an electrode pin to a wire electrode.

A wire electric discharge machine of the present invention has a plurality of power sources, a first and a second wire guide, and plural sets of power supply lines to be selectively used according to machining conditions, wherein one polarity of each set of the power supply lines is electrically connected to a wire electrode in the first wire guide and, for at least one said set of power supply lines, connectable to said wire electrode in the second wire guide through an electrode pin, and the other polarity of each set of the power supply lines is electrically connected to a workpiece. The wire electric discharge machine comprises: an attaching/detaching mechanism arranged to perform attachment/detachment of the electrode pin relative to/from the wire electrode; short-circuit detection means arranged to detect a short circuit between the wire electrode and the workpiece, one polarity of the short-circuit detection means being electrically connected to the electrode pin and the other polarity of the short-circuit detection means being electrically connected to the workpiece; a switch arranged to make the wire electrode and the workpiece have the same electric potential; and a controller arranged to detect a contact/non-contact state between the electrode pin and the wire electrode using the short-circuit detection means and the switch.

The wire electrical discharge machine may further comprise a cleaning fluid jetting device arranged to jet cleaning fluid to the attaching/detaching mechanism, and the controller may control the jetting device to jet the cleaning fluid to the attaching/detaching mechanism and then control the attaching/detaching mechanism to perform the attachment/detachment of the electrode pin and the wire electrode again in a case where a state of the attachment/detachment of the electrode pin and the wire electrode performed by the attaching/detaching mechanism is not in conformity with the detected contact/non-contact state of the electrode pin and the wire electrode.

The cleaning fluid may be liquid or gas.

The present invention can provide the wire electric discharge machine that is capable of detecting a contact and non-contact between the wire electrode and the electrode pin by using a function of detecting a short circuit and non-short circuit between the wire electrode and the workpiece.

### BRIEF DESCRIPTION OF THE DRAWINGS

FIG. 1 is a schematic block diagram showing a wire electric discharge machine having a plurality of power sources that are selected according to machining conditions;
FIGS. 2a to 2f are longitudinal sectional views and cross-sectional views of a lower guide;
FIG. 3 is a schematic block diagram showing one embodiment of the wire electric discharge machine having an electrode-pin motion detection circuit of the present invention;
FIG. 4 is a view for explaining that the wire electric discharge machine is controlled by a numerical controller;
FIG. 5 is a flowchart showing an algorithm for performing an electrode-pin motion detection that is carried out when finish machining is switched to rough machining according to the present invention; and
FIG. 6 is a flowchart showing an algorithm for performing an electrode-pin motion detection that is carried out when the rough machining is switched to the finish machining according to the present invention.

### DETAINED DESCRIPTION

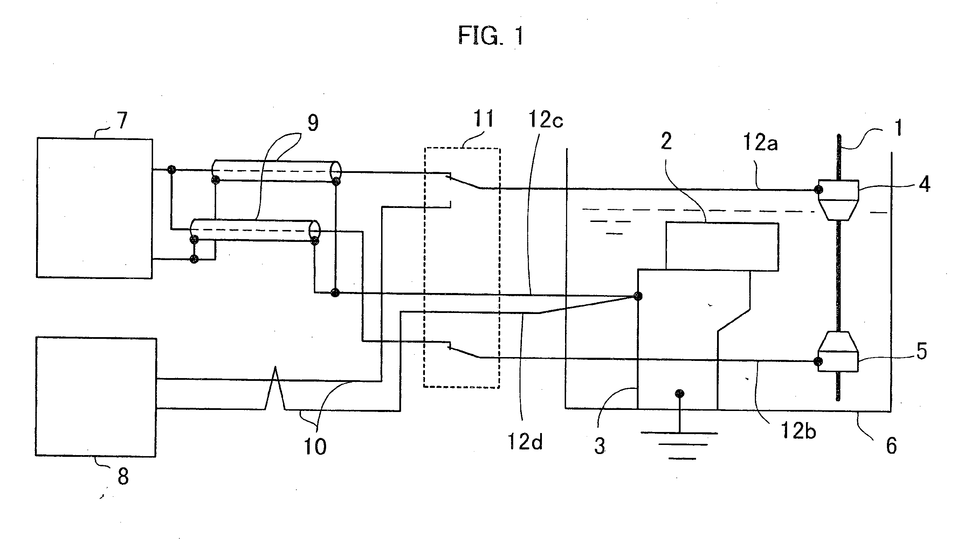

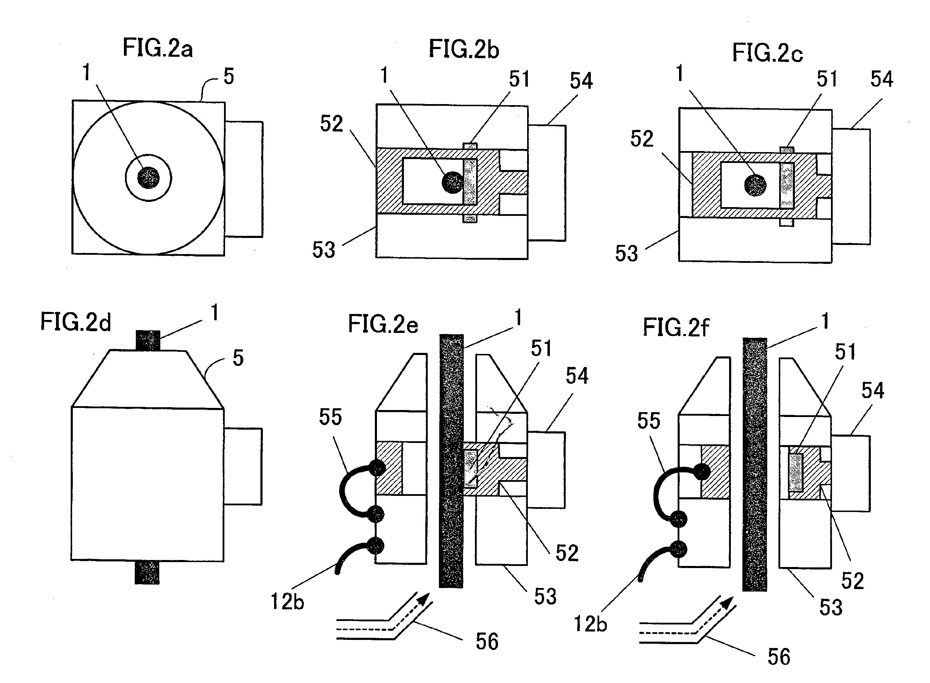

FIG. 1 is a schematic block diagram showing a wire electric discharge machine having a plurality of power sources that are selected according to machining conditions. In FIG. 1, 1 represents a wire electrode; 2 represents a workpiece; and 3 represents a table on which the workpiece is placed. The workpiece 2 is soaked in machining fluid within a machining tank 6. The wire electrode 1 is drawn out of a wire reel, not shown, inserted through through-holes of an upper guide 4 and a lower guide 5, and wound up by a take-up reel, not shown. The wire electrode 1 is electrically conducted by electrode pins provided to the upper guide 4 and the lower guide 5. The electrode pins will be described later with reference to FIGS. 2a to 2f.

As shown in FIG. 1, one polarity of a rough machining power source 7 is connectable to the upper guide 4 and the lower guide 5 through power supply lines 9 for rough machining, which are low inductance cables such as coaxial cables, an upper extension cable 12a, and a lower extension cable 12b. One polarity of a finish machining power source 8 is connectable to the upper guide 4 through power supply lines 10 for finish machining, such as twisted pair lines with low capacitances, and the upper extension cable 12a. The other polarity of the rough machining power source 7 and that of the finish machining power source 8 are connected to the table 3 through power supply lines 12c and 12d.

Voltages from the rough machining power source 7 and the finish machining power source 8 are selectively connected between the electrodes of the wire electrode 1 and the workpiece 2 by a switching relay 11. In the figure, the power supply lines 12c and 12d are illustrated passing through the switching relay 11. The power supply lines 12c and 12d may be set to run either through or outside the switching relay 11.

During rough machining, the power supply from the rough machining power source 7 is carried out from both the upper guide 4 and the lower guide 5 through the power supply lines 9 for rough machining, which are axial cables with low capacitances (low impedances) as described above, the upper extension cable 12a, and the lower extension cable 12b. During the rough machining, the power supply lines that are coaxial lines with low inductances (low impedances) are used to increase the machining speed, reduce a rise and decay time of electrical discharge machining current, set a peak current to a high value, and also fully secure a pulse quiescent time.

During the finish machining, twisted pair lines with low capacitances are used as the power supply lines 10 for finish machining. The power supply from the finish machining power source 8 is carried out only from the upper guide 4 as shown in FIG. 1. In the lower guide 5, the wire electrode 1 and an electrode pin 51 are detached away from each other (see FIGS. 2). A conductive current is relatively small during the finish machining, so that electric conduction can be achieved through a single place, namely the upper guide 4. This makes it possible to reduce a stray capacitance between the lower extension cable 12b and the table 3 (connected in parallel between electrodes), and to improve surface roughness obtained after the finish machining. In addition, the power supply from the finish machining power source 8 may be carried out only from the lower guide 5.

FIGS. 2a to 2f are longitudinal sectional views and cross-sectional views of the lower guide 5. FIG. 2a shows the lower guide 5 as viewed from above. FIGS. 2b and 2c are cross-sectional views of the lower guide 5, each of which is cut away along a plane orthogonal to the wire electrode 1. FIG. 2d shows the lower guide 5 as viewed from side. FIGS. 2e and 2f are longitudinal sectional views of the lower guide 5, each of which is cut away along a plane including the wire electrode 1.

In the figure, 51 is an electrode pin; 52 is a movable block; 53 is a fixed block; 54 is an air cylinder that moves the movable block 52; 55 is a short-circuit cable; and 56 is a medium feeding pipe for cleaning. The lower extension cable 12b is connected to the fixed block 53. The electrode pin 51 is fixed to the movable block 52, and is moved by the air cylinder 54 integrally with the movable block 52.

When power is supplied from the rough machining power source 7, the air cylinder 54 is driven, and the movable block 52 is pushed out so that the electrode pin 51 is pressed against the wire electrode 1 (in the left direction as viewed into the figure). FIGS. 2b and 2e show a state in a rough machining period. In this manner, one polarity of the rough machining power source 7 is electrically connected to the wire electrode 1 through the lower extension cable 12b.

When power is supplied from the finish machining power source 8, the air cylinder 54 is driven, and the movable block 52 is pulled back so that the electrode pin 51 is detached away from the wire electrode 1 (in the right direction as viewed into the figure). FIGS. 2c and 2f show a state in a finish machining period. In this manner, disconnection from the rough machining power source 7 and the finish machining power source 8 is carried out.

Machining dust from the workpiece 2 and the wire electrode 1 is mixed into the machining fluid, such as water, filled in the machining tank 6. The machining dust leads to a poor mechanical operation of the lower guide 5. As preventive measures against a poor contact between the wire electrode 1 and the electrode pin 1, and against a poor mechanical operation of the movable block 52, during a period when the wire electric discharge machine machines the workpiece, a cleaning medium, such as water and air, is periodically jetted from the medium feeding pipe 56 for cleaning toward contact faces of the wire electrode 1 and the electrode pin 51 and sliding faces of the movable block 52 and the fixed block 53 (for example, ten-second jetting every five minutes).

However, when machining work is performed switching from the rough machining to the finish machining or from the finish machining to the rough machining, even if the cleaning medium, such as water and air, is jetted from the medium feeding pipe 56 for cleaning toward the contact faces of the wire electrode 1 and the electrode pin 51 and the sliding faces of the movable block 52 and the fixed block 53, it is impossible to know whether the wire electrode 1 and the electrode pin 51 are surely in a contact or non-contact state.

The present invention therefore detects a contact and non-contact state of the wire electrode 1 and the electrode pin 51 by using means for detecting a short circuit/non-short circuit between electrodes of the wire electrode 1 and the workpiece 2. In this specification, the contact between the wire electrode 1 and the electrode pin 51 corresponds to the "short circuit", and the non-contact corresponds to the "non-short circuit".

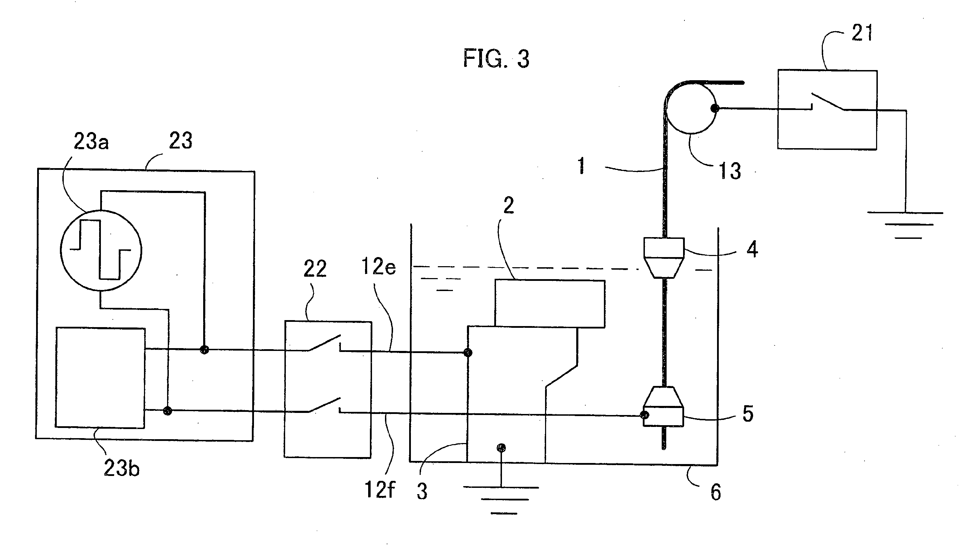

FIG. 3 is a schematic block diagram showing one embodiment of the wire electric discharge machine that detects a contact/non-contact between the wire electrode 1 and the electrode pin 51 according to the present invention.
A short-circuit detection circuit 23 is generally provided to a wire electric discharge machine as means for detecting a short circuit between the wire electrode 1 and the workpiece 2 not in the machining process. In order to detect the contact/non-contact between the wire electrode 1 and the electrode pin 51, the short circuit detection circuit 23 is utilized to constitute a contact/non-contact circuit with a first relay 21, a second relay 22 and extension cables 12e and 12f.

First, detection of the short circuit/non-short circuit between the wire electrode 1 and the workpiece 2 that is usually performed in the wire-cut electric discharge machine will be explained below. The setting of the first relay 21 and that of the second relay 22 are "the first relay 21=OFF" and "the second relay 22=ON". If a weak short-circuit detection pulse (for example, a pulse whose peak value is about 5V) is applied between the electrodes from a short-circuit detection-pulse generating source 23a, a direct voltage from the short-circuit detection-pulse generating source 23a is detected by a short-circuit/non-short-circuit judging circuit 23b when there is no short circuit between the electrodes. When there is a short circuit between the electrodes, a voltage from the short-circuit detection-pulse generating source 23a is not detected by the short-circuit/non-short-circuit judging circuit 23b. The short-circuit/non-short-circuit judging circuit 23b judges whether there is a short circuit or not between the electrodes on the basis of differences between the detected voltages. When the workpiece 2 is machined while applying voltage between the electrodes of the wire electrode 1 and the workpiece 2 from the machining power sources 7 and 8, the setting of the first relay 21 and that of the second relay 22 are "the first relay 21=OFF" and "the second relay 22=OFF", and power supply voltage is thus prevented from being applied to the short-circuit detection circuit 23, to thereby protect the circuit.

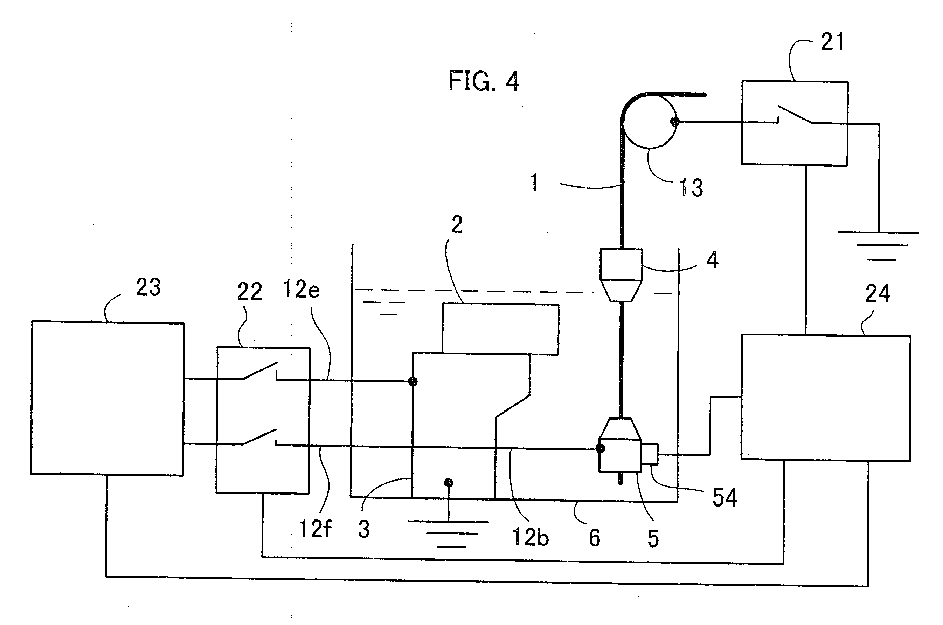

Secondly, a function of detecting the attachment/detachment of the electrode pin 51 to/from the wire electrode 1 according to the present invention will be explained below. A judgment of attachment/detachment of the electrode pin 51 to/from the wire electrode 1 according to the present invention is made based on judgment of the contact/non-contact between the wire electrode 1 and the electrode pin 51 in a state where the wire electrode 1 is spaced apart from the workpiece 2, i.e. a short circuit is not formed between the wire electrode 1 and the workpiece 2. Control for the detection process of the contact and non-contact between the wire electrode 1 and the electrode pin 51 and control on the entire wire electric discharge machine are carried out by a numerical controller 24 as shown in FIG. 4.

The setting of the first relay and that of the second relay are "the first relay 21=ON" and "the second relay 22=ON". The wire electrode 1 therefore has an earth potential through a conductive roller 13 and the first relay 21. In result, the wire electrode 1 has the same potential as the workpiece 2 that is mounted on the table 3. One polarity of the short-circuit detection circuit 23 is connected to the workpiece 2 through the table 3, and the other polarity is connected to the electrode pin 51 through the fixed block 5 and the movable block 52 of the lower guide 5. If the setting is thus determined, the short circuit/non-short-circuit judging circuit 23b outputs a judgment of short circuit when the wire electrode 1 and the electrode pin 51 are in contact to each other, and outputs a judgment of non-short circuit when the wire electrode 1 and the electrode pin 51 are not in contact to each other.

In other words, when the detection of detachment and attachment between the wire electrode 1 and the electrode pin 51 is made, a circuit is formed, which is constructed of the short-circuit detection-pulse generating source 23a, the second relay 22, the table 3, the electrode pin 51 of the lower guide 5 (see FIG. 2), the cables 12e and 12f, the first relay 21, the wire electrode 1, and the roller 13. This circuit is open at the time of detachment between the wire electrode 1 and the electrode pin 51 (non-contact state), and the circuit is closed at the time of attachment between the wire electrode 1 and the electrode pin 51 (contact state).

When the judgment process of a contact/non-contact between the wire electrode 1 and the electrode pin 51 is finished, the first relay 21 and the second relay 22 are switched OFF, so that the short-circuit detection circuit 23 is free from any influence at the time of machining the workpiece by the rough machining power source 7 and the finish machining power source 8.

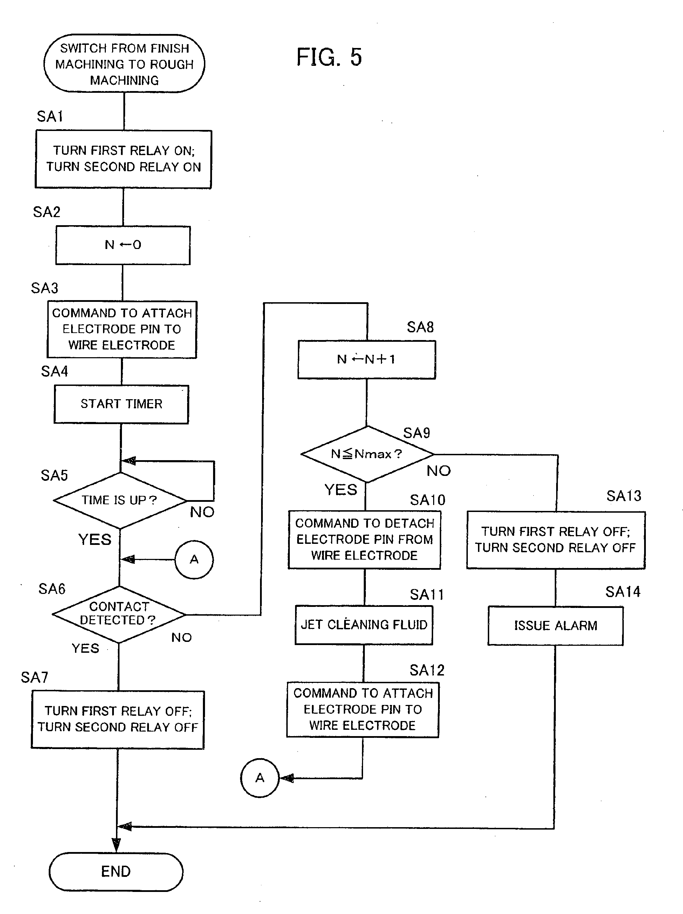

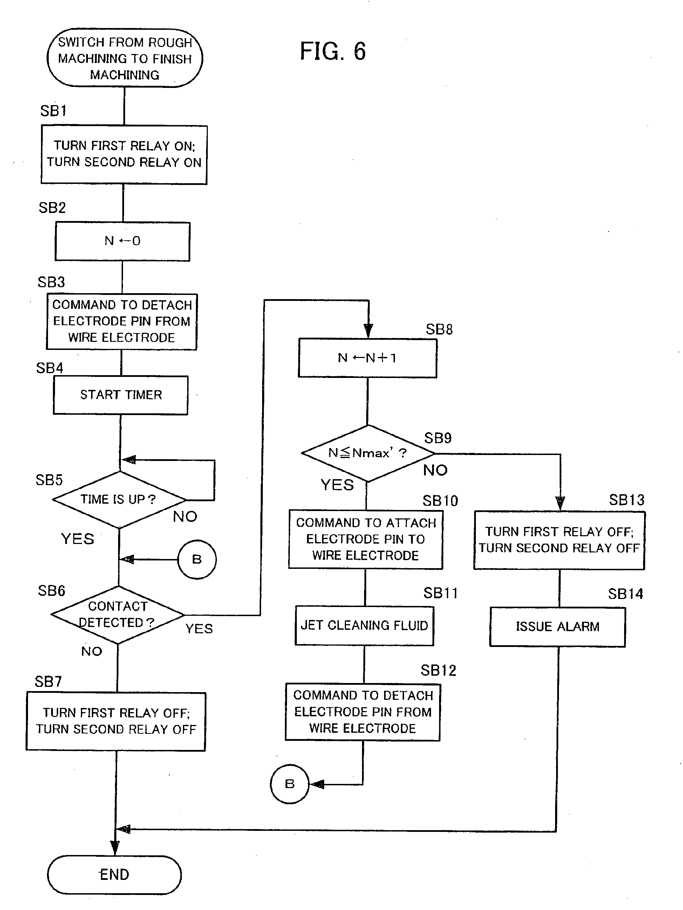

At the time of switching the machining conditions between the rough machining and the finish machining, a detection of motion of the electrode pin 51 is performed before the machining is started. FIG. 5 is a flowchart showing an algorithm for performing an electrode-pin motion detection that is made when the finish machining is switched to the rough machining according to the present invention. FIG. 6 is a flowchart showing an algorithm for performing an electrode-pin motion detection that is made when the rough machining is switched to the finish machining according to the present invention.

First, the flowchart of the algorithm for performing the electrode-pin motion detection that is made when the finish machining is switched to the rough machining according to the present invention as shown in FIG. 5 will be explained in order of steps. The first relay 21 is turned ON, and the second relay 22 is turned ON (Step SA1). Subsequently, the number of times of retry is set to an initial value (N=0) (Step SA2). In order to switch the finish machining to the rough machining, a command to attach the electrode pin 51 to the wire electrode 1 is issued from the controller (Step SA3).

In consideration of a delay from the time point when the driving mechanism receives the command to attach the electrode pin 51 onto the wire electrode 1 to the time point when motion is completed, a timer is started (Step SA4), and a given time duration is waited for to lapse (Step SA5).

A detection is made as to whether the wire electrode 1 is in contact with the electrode pin 51 by the short-circuit detection circuit 23 (Step SA6). If the contact with the electrode pin 51 is detected (if the judgment is YES), the procedure proceeds to Step SA7. If not, the procedure proceeds to Step SA8.

If it is judged in Step SA6 that the wire electrode 1 is in contact with the electrode pin 51 (if the judgment is YES), the switching of the electrode pin 51 from the finish machining to the rough machining is accomplished, so that the first relay 21 and the second relay 22 are turned OFF (Step SA7), and the attachment detection process of the electrode pin 51 is terminated.

If it is not judged in Step SA6 that there is a short circuit (if the judgment is NO), the number of times of retry N is incremented by 1, and the procedure proceeds to Step SA9 (Step SA8). A judgment is made as to whether the number of times of retry N is equal to or less than the maximum number of times of try Nmax. If the number of times of retry N is equal to or less than the maximum number of times of try Nmax (if the judgment is YES), a command to detach the electrode pin 51 is outputted. A command to jet cleaning fluid in the form of liquid such as water or gas such as air from the fluid feeding pipe 56 for cleaning toward the contact faces of the wire electrode 1 and the electrode pin 51 and the sliding faces of the movable block 52 and the fixed block 53 is outputted, to thereby implement the cleaning fluid jetting process. Subsequently, a command to attach the electrode pin 51 to the wire electrode 1 is outputted, and the procedure returns to Step SA6 (Step SA9 to Step SA12).

Contrary, if it is determined in Step SA9 that the number of times of retry N exceeds the maximum number of times of try Nmax (if the judgment is NO), the first relay 21 and the second relay 22 are turned OFF (Step SA13), and an alarm is issued (Step SA14) to terminate the attachment detection process of the electrode pin 51. This makes it possible to learn that there is a problem in the switching from the finish machining to the rough machining. It is then possible to suspend the machining of the workpiece 2 which is carried out by the rough machining, and to avoid damages on the expensive workpiece.

In the next place, the flowchart illustrated in FIG. 6, which shows the algorithm for performing the electrode-pin motion detection that is carried out when the rough machining is switched to the finish machining according to the present invention, will be explained in order of steps.

The first relay 21 is turned ON, and the second relay 22 is turned ON (Step SB1). The number of times of retry is set to be the initial value (N=0) (Step SB2). In order to switch the rough machining to the finish machining, a command to detach the electrode pin 51 from the wire electrode 1 is issued from the controller (Step SB3).

In consideration of a delay from the point in time when the driving mechanism receives the command to detach the electrode pin 51 from the wire electrode 1 to the point in time when motion is completed, the timer is started (Step SB4), and a given time duration is waited for to lapse (Step SB5).

A detection is made as to whether the wire electrode 1 is in contact with the electrode pin 51 by the short-circuit detection circuit 23 (Step SB6). If it is judged that the electrode 1 is in contact with the electrode pin 51 (if the judgment is YES), the procedure proceeds to Step SB8. If not, the procedure proceeds to Step SB7.

If it is judged in Step SB6 that the wire electrode 1 is not in contact with the electrode pin 51 (if the judgment is NO), this means that the switching from the rough machining to the finish machining is accomplished, so that the first relay 21 and the second relay 22 are turned OFF (Step SB7), and the detachment detection process of the electrode pin 51 is terminated.

If it is judged in Step SB6 that the wire electrode 1 is in contact with the electrode pin 51 (if the judgment is YES), the number of times of retry N is incremented by 1, and the procedure proceeds to Step SB9 (Step SB8). A judgment is made as to whether the number of times of retry N is equal to or less than the maximum number of times of try Nmax'. If the number of times of retry N is equal to or less than the maximum number of times of try Nmax' (if the judgment is YES), the command to attach the electrode pin 51 to the wire electrode 1 is issued. A command to jet the cleaning fluid from the cleaning fluid feeding pipe 56 toward the contact faces of the wire electrode 1 and the electrode pin 51 and the sliding faces of the movable block 52 and the fixed block 53 is issued, to thereby perform the cleaning fluid jetting process. Subsequently, the command to detach the electrode pin 51 from the wire electrode 1 is issued, and the procedure returns to Step SB6 (Step SB9 to Step SB12).

If it is judged in Step SB9 that the number of times of retry N exceeds the maximum number of times of try Nmax' (if the judgment is NO), the first relay 21 and the second relay 22 are turned OFF (Step SB13), and an alarm is issued (Step SB14), to terminate the detachment detection process of the electrode pin. This makes it possible to learn that there is a problem in the switching from the rough machining to the finish machining. It is also possible to suspend the machining of the workpiece 2 which is carried out by the finish machining, and to avoid damages on an expensive workpiece.

## Claims

1. A wire electric discharge machine having a plurality of power sources (7, 8), a first and a second wire guide (4, 5), and plural sets of power supply lines (9, 10) to be selectively used according to machining conditions, wherein one polarity of each set of the power supply lines is electrically connected to a wire electrode (1) in the first wire guide (4) and, for at least one said set of power supply lines, connectable to said wire electrode (1) in the second wire guide (5) through an electrode pin (51), and the other polarity of each set of the power supply lines is electrically connected to a workpiece (2), said wire electric discharge machine comprising:
an attaching/detaching mechanism (52, 53, 54) arranged to perform attachment/detachment of the electrode pin (51) relative to/from the wire electrode (1); **characterised by** further comprising
short-circuit detection means (23) arranged to detect a short circuit between the wire electrode (1) and the workpiece (2), one polarity of said short-circuit detection means being electrically connected to the electrode pin (51) and the other polarity of said short-circuit detection means being electrically connected to the workpiece (2);
a switch (21, 22) arranged to make the wire electrode (1) and the workpiece (2) have the same electric potential; and
a controller (24) arranged to determine a contact/non-contact state between the electrode pin (51) and the wire electrode (1) using said short-circuit detection means and said switch.

2. A wire electrical discharge machine according to claim 1, further comprising a cleaning fluid jetting device (56) arranged to jet cleaning fluid to said attaching/detaching mechanism (52, 53, 54),
wherein said controller (24) controls said jetting device (56) to jet the cleaning fluid to said attaching/detaching mechanism and then controls said attaching/detaching mechanism to perform the attachment/detachment of the electrode pin (51) and the wire electrode (1) again in a case where a state of the attachment/detachment of the electrode pin and the wire electrode performed by said attaching/detaching mechanism is not in conformity with the detected contact/non-contact state of the electrode pin and the wire electrode.

3. A wire electrical discharge machine according to claim 2, wherein the cleaning fluid is liquid.

4. A wire electrical discharge machine according to claim 2, wherein the cleaning fluid is gas.

## Patentansprüche

1. Schneiddraht-Funkenerosionsmaschine mit einer Anzahl Energiequellen (7, 8), einer ersten und einer zweiten Drahtführung (4, 5) und mehreren Sätzen Energiezufuhrkabel (9, 10), die gemäß Bearbeitungsbedingungen selektiv verwendet werden sollen, wobei eine Polung von jedem Satz Energiezufuhrkabel elektrisch mit einer Drahtelektrode (1) in der ersten Drahtführung (4) verbunden ist und, bei mindestens einem Satz Energiezufuhrkabel, anschließbar an die Drahtelektrode (1) in der zweiten Drahtführung (5) über eine Elektrodenanschluss (51), und wobei die andere Polung von jedem Satz Energiezufuhrkabel elektrisch mit einem Werkstück (2) verbunden ist, die Schneiddraht-Funkenerosionsmaschine umfassend
einen Verbindungs-/Lösungsmechanismus (52, 53, 54), angeordnet zum Ausführen einer Verbindung/Lösung der Elektrodennadel (51) mit/von der Drahtelektrode (1), **dadurch gekennzeichnet, dass** sie zudem umfasst
Kurzschluss-Erkennungsmittel (23), angelegt zum Erkennen eines Kurzschlusses zwischen der Drahtelektrode (1) und dem Werkstück (2), wobei eine Polung des Kurzschluss-Erkennungsmittels elektrisch mit der Elektrodennadel (51) verbunden ist und die andere Polung das Kurzschluss-Erkennungsmittels elektrisch mit dem Werkstück (2) verbunden ist;
einen Schalter (21, 22), angelegt dazu, dass die Drahtelektrode (1) und das Werkstück (2) das gleiche elektrische Potential haben; und
eine Steuerung (24), angelegt zum Bestimmen eines Kontakt-/Nicht-kontaktzustands zwischen der Elektrodennadel (51) und der Drahtelektrode (1) mit Hilfe des Kurzschluss-Erkennungsmittels und des Schalters.

2. Schneiddraht-Funkenerosionsmaschine gemäß Anspruch 1, zudem umfassend eine Reinigungsfluid-Strahlvorrichtung (56), angeordnet zum Ausstoßen von Reinigungsfluid zum Verbindungs-/Lösungsmechanismus (52, 53, 54),
wobei die Steuerung (24) die Strahlvorrichtung (56) steuert, so dass sie das Reinigungsfluid auf den Verbindungs-/Lösungsmechanismus ausstößt und dann den Verbindungs-/Lösungsmechanismus so steuert, dass er die Verbindung/das Loslösen der Elektrodennadel (51) und der Drahtelektrode (1) wieder durchführt, im einem Falle dass ein vom Verbindungs-/Lösungsmechanismus ausgeführter Zustand von Verbindung/Loslösung der Elektrodennadel und der Drahtelektrode nicht dem erfassten Kontakt-/Nichtkontaktzustand der Elektrodennadel und der Drahtelektrode entspricht.

3. Schneiddraht-Funkenerosionsmaschine gemäß Anspruch 2, wobei das Reinigungsfluid flüssig ist.

4. Schneiddraht-Funkenerosionsmaschine gemäß Anspruch 2, wobei das Reinigungsfluid Gas ist.

## Revendications

1. Une machine de décharge électrique à fil possédant une pluralité de sources électriques (7, 8), un premier et un deuxième guide-fils (4, 5) et une pluralité d'ensembles de lignes d'alimentation électrique (9, 10) destinées à être utilisées de manière sélective en fonction des conditions d'usinage, où une polarité de chaque ensemble de lignes d'alimentation électrique est électriquement raccordée à une électrode en fil (1) dans le premier guide-fil (4) et, pour au moins un desdits ensembles de lignes d'alimentation électrique, raccordable à ladite électrode en fil (1) dans le deuxième guide-fil (5) par l'intermédiaire d'une broche d'électrode (51), et l'autre polarité de chaque ensemble des lignes d'alimentation électrique est électriquement raccordée à une pièce à usiner (2), ladite machine de décharge électrique à fil comprenant :
un mécanisme de rattachement/détachement (52, 53, 54) agencé de façon à exécuter le rattachement/détachement de la broche d'électrode (51) à/de l'électrode en fil (1), **caractérisé en ce qu'**elle comprend en outre
un moyen de détection de court-circuit (23) agencé de façon à détecter un court-circuit entre l'électrode en fil (1) et la pièce à usiner (2), une polarité dudit moyen de détection de court-circuit étant électriquement raccordée à la broche d'électrode (51) et l'autre polarité dudit moyen de détection de court-circuit étant électriquement raccordée à la pièce à usiner (2),
un commutateur (21, 22) agencé de façon à faire en sorte que l'électrode en fil (1) et la pièce à usiner (2) possèdent le même potentiel électrique, et
un système de commande (24) agencé de façon à déterminer un état de contact/non-contact entre la broche d'électrode (51) et l'électrode en fil (1) au moyen dudit moyen de détection de court-circuit et dudit commutateur.

2. Une machine de décharge électrique à fil selon la revendication 1, comprenant en outre un dispositif de projection de fluide de nettoyage (56) agencé de façon à projeter du fluide de nettoyage vers ledit mécanisme de rattachement/détachement (52, 53, 54),
où ledit système de commande (24) commande ledit dispositif de projection (56) de façon à projeter le fluide de nettoyage vers ledit mécanisme de rattachement/détachement et ensuite commande ledit mécanisme de rattachement/détachement de façon à exécuter à nouveau le rattachement/détachement de la broche d'électrode (51) et de l'électrode en fil (1) dans le cas où un état du rattachement/détachement de la broche d'électrode et de l'électrode en fil exécuté par ledit mécanisme de rattachement/détachement n'est pas en conformité avec l'état de contact/non-contact détecté de la broche d'électrode et de l'électrode en fil.

3. Une machine de décharge électrique à fil selon la revendication 2, où le fluide de nettoyage est liquide.

4. Une machine de décharge électrique à fil selon la revendication 2, où le fluide de nettoyage est gazeux.
